# FASCICULE DE BREVET EUROPEEN

(11) **EP 0 842 607 B1**
(45) Date de publication et mention de la délivrance du brevet: **13.03.2002**
(21) Numéro de dépôt: 96203110.0
(22) Date de dépôt: 11.11.1996
(51) Int. Cl.: A21D 13/00, A21D 13/08, A21D 2/26, A21D 8/02, A21D 6/00

(54) **Procédé de fabrication d'une pâte feuilletée**
Verfahren zur Herstellung von Blätterteig
Process for manufacturing puff pastry

(43) Date de publication de la demande: 20.05.1998
(73) Titulaire: SOCIETE DES PRODUITS NESTLE S.A., 1800 Vevey (CH)
(72) Inventeur: Ferrari-Philippe, Fabiana, 60000 Plouy Saint Lucien (FR); Harlaux, Ginette, 60000 Beauvais (FR); Penet, Sylvie, 60430 Warluis (FR)
(74) Mandataire: Wavre, Claude-Alain

(56) Documents cités:
- EP-A- 0 141 754
- FR-A- 2 698 761
- GB-A- 2 070 408
- US-A- 3 255 016

## Description

La présente invention a pour objet un procédé de préparation d'une pâte feuilletée.

Il est connu que, traditionnellement, la préparation d'une pâte feuilletée bien aérée et légère implique un travail délicat et relativement long.

J.L Kiger et al. (Techniques modernes de la biscuiterie, pâtisserie - boulangerie industrielles et artisanales et des produits de régime - tome 1, p 347-348, coll. DUNOD, 1968) décrit une préparation de pâte feuilletée constituée d'une succession de tourages, c'est à dire une succession de replis de la pâte sur elle-même, de manière à réaliser un feuilletage constitué d'une superposition de feuillets de matière grasse et de feuillets de pâte. Le document décrit une préparation, dans laquelle la matière grasse plastique et la farine sont de poids égal et la quantité d'eau est équivalente à la moitié du poids de farine. L'eau et la farine sont mélangés en une pâte homogène qui, après 10-15 min de repos, est laminée en un feuillet carré au milieu duquel le matière grasse plastique, le beurre, est disposé en petits morceaux. Le beurre est emprisonné dans la pâte par repli des côtés du feuillet, de manière à obtenir un feuillet de beurre entre deux feuillets de pâte. Après un repos de 15 min, la pâte est laminée en une longue bande mince qui est ensuite repliée sur elle-même en 3 morceaux d'égale longueur, pour réaliser un feuilletage constitué de 3 couches de beurre séparées par 2 couches de pâte. Puis, 6 tourages successifs, séparés par des temps de repos de 15 min pendant lesquels la pâte est recouverte d'un linge humide pour éviter le croutage, sont réalisés, de manière à obtenir une pâte feuilletée constituée de 729 feuillets de beurre séparés par des couches de pâte. Après cuisson, la pâte présente ainsi un feuilletage aéré et léger.

Par ailleurs, UK 2070408 décrit la préparation d'une pâte feuilletée dans laquelle de la farine, de l'eau, du sel et des morceaux de matière grasse sont mélangés ensemble, de manière à obtenir une pâte hétérogène présentant des morceaux de matière grasse. Cette pâte est laminée et placée dans un endroit frais, avant d'être découpée en un nombre important de lamelles, de préférence de 0,25 mm à 3 mm d'épaisseur, qui sont ensuite agglomérées ensemble, de manière à réaliser une pâte hétérogène, présentant des morceaux de matière grasse et constituée d'une superposition de feuillets. Puis, la pâte feuilletée ainsi réalisée est laminée en une pâte de 5 à 6 mm d'épaisseur et est utilisée pour la réalisation de produits alimentaires.

La présente invention a pour but de proposer un procédé de préparation d'une pâte feuilletée présentant des propriétés physiques et des qualités organoleptiques semblables à celles des pâtes feuilletées traditionnelles.

A cet effet, dans le procédé de préparation d'une pâte feuilletée selon la présente invention, on effectue un mélange à température ambiante d'une composition contenant, pour 1 kg de farine, 16-24 g de sel, 7-13 g de protéines acides, 19-21 g d'agent de fermentation inactivé, on ajoute à cette composition, au cours de l'étape de mélange, 320-480 g de matière grasse en morceaux, de manière à obtenir une pâte hétérogène, enfin on incorpore 450-550 g d'eau à température ambiante à cette pâte, on extrude la pâte, de manière à compresser les morceaux de matière grasse et à obtenir une pâte feuilletée, puis on stocke cette pâte feuilletée à une temprature de - 40° C à + 10° C.

On a constaté avec surprise que le procédé de préparation de la pâte feuilletée selon l'invention, bien que ne présentant pas une succession d'étapes de tourage, permet de réaliser, dans des conditions de mise en oeuvre simples et rapides, une pâte présentant un feuilletage aéré et léger. De plus, ce procédé permet de réaliser une pâte feuilletée ayant une meilleure retenue d'humidité que celle d'une pâte feuilletée obtenue par un procédé traditionnel. Enfin, la pâte feuilletée obtenue par la mise en oeuvre du procédé selon la présente invention peut être stockée à basses températures et peut, notamment, être réchauffée aux micro-ondes, tout en gardant une texture feuilletée bien aérée et légère.

Dans la suite de la description, on emploiera l'expression "plat cuisiné" pour désigner notamment des snacks ou des entremets.

Enfin, dans la suite de la description, on emploiera l'expression "levure lactique" pour désigner des levures de type *Saccharomyces kluyveromyces lactis* ou des levures de type *Saccharomyces kluyveromyces fragilis* ayant poussées sur un milieu de culture lactique, tel que le lait dégraissé et déprotéiné.

Dans le procédé de préparation de la pâte feuilletée selon la présente invention, on peut effectuer l'étape de mélange dans un broyeur à pales pendant 20 s à 1 min à 5-13 rpm, par exemple. On peut notamment utiliser le broyeur à pales commercialisé par Maschinen Fabrik Laska, GES M.B.H, Markstrasse 60, AU - 4050 TRAUN.

On effectue donc un mélange à température ambiante d'une composition contenant, pour 1 kg de farine, 16-24 g de sel, 7-13 g de protéines acides, 19-21 g d'agent de fermentation inactivé.

La farine est de préférence de la farine de blé tendre, dont la teneur en gluten est de 7-13%, de manière à obtenir une pâte ayant une texture moelleuse.

Les protéines acides sont, de préférence, des protéines laitières. Elles donnent une meilleure extensibilité à la pâte, notamment lors du laminage de la pâte, en réduisant la dureté de la pâte et jouent un rôle dans la coloration de la pâte, lors de sa cuisson et de sa réchauffe.

L'agent de fermentation inactivé est, de préférence, une levure boulangère inactivée thermiquement ou une levure lactique inactivée thermiquement. Il est destiné à favoriser la formation d'une texture plus aérée de la pâte, en améliorant l'élasticité et le feuilletage de la pâte. En effet, il agit sur les ponts disulfures du gluten, en permettant une meilleure absorption d'eau et une meilleure relaxation du gluten et évite ainsi l'obtention d'une texture caoutchouteuse et un fort dessèchement de la pâte lors de la réchauffe aux micro-ondes.
L'agent de fermentation inactivé est donc une levure boulangère ou une levure lactique inactivées par un traitement thermique suffisant stoppant l'activité de fermentation puis séchées par atomisation. Il peut être notamment la levure boulangère inactivée thermiquement, commercialisée par Gist-Brocades N.V., Food Ingredient division, P.B. 01, NL-260 MA DELFT ou par Fould Springer, 103 rue Jean Jaures, F-94701 MAISON ALFORD ou la levure lactique inactivée thermiquement, commercialisée par Fromagerie Bel, 8, rue Penthièvre, F-75008 PARIS, par exemple.

On ajoute donc à cette composition, au cours de l'étape de mélange, 320-480 g de matière grasse en morceaux, de manière à obtenir une pâte hétérogène. La matière grasse peut être de la margarine feuilletable, par exemple.

Enfin, on incorpore 450-550 g d'eau à température ambiante à cette pâte.

On extrude ensuite la pâte, de manière à compresser les morceaux de matière grasse et à obtenir une pâte feuilletée. On peut l'extruder dans un extrudeur bi-vis commercialisé par Rijkaart Maschinen Fabrik, NL - 4147 CT Asperen, par exemple.

Puis, on stocke donc la pâte feuilletée ainsi réalisée à une température de - 40° C à + 10° C. On peut la stocker au réfrigérateur, au congélateur ou la surgeler, par exemple.

On peut cuire la pâte feuilletée avant ou après l'étape de stockage, par exemple. On peut la portionner en pâtons de 20-500 g, avant de la cuire, par exemple. On peut la cuire dans un four conventionnel à 190-250° C pendant 10-45 min ou dans un cuiseur à bandes à 190-225° C pendant 2-10 min, par exemple.

On réchauffe alors la pâte feuilletée, de préférence, aux micro-ondes pendant 20 s à 10 min, après l'étape de cuisson suivie de l'étape de stockage ou après l'étape de stockage suivie de l'étape de cuisson, de manière à obtenir une pâte feuilletée prête à la consommation et présentant un feuilletage léger et bien aéré. On peut également la réchauffer dans un four conventionnel à 150-220° C, par exemple. On peut également consommer la pâte ainsi réalisée sans la réchauffer au préalable, par exemple.

On peut, avant ou après l'étape de stockage, laminer ou foncer la pâte feuilletée, disposer sur la bande ou sur le fond de pâte feuilletée des morceaux de viande ou de poisson, une sauce, des légumes ou des fruits entiers et/ou en morceaux, du fromage, des épices et/ou des céréales et effectuer l'étape de cuisson.

Si l'on souhaite réaliser un plat cuisiné salé, on peut disposer, sur la bande ou le fond de pâte selon l'invention, des morceaux de viande ou de poisson, une sauce, des légumes entiers et/ou en morceaux, du fromage, des épices et/ou des céréales, par exemple.
La viande peut être du boeuf, du poulet, de la dinde, du veau, du porc ou des produits de charcuterie, comme du jambon, de la saucisse ou du salami, par exemple.
Le poisson peut être du cabillaud, du saumon, de la sole ou du colin, par exemple. On peut ajouter les morceaux de viande ou de poisson précuits ou à l'état cru, par exemple. On peut également ajouter la viande ou le poisson haché dans la sauce, par exemple.

Les légumes entiers et/ou en morceaux peuvent être des tomates, des poivrons,des champignons, des graines de mais, des oignons, des carottes, des petits pois, du céleri, des haricots, des pommes de terre ou des broccolis, par exemple.
On peut blanchir ou précuire les légumes entiers et/ou en morceaux avant de les ajouter à la pâte, par exemple. On peut également les ajouter sous forme de purée, par exemple.

Le fromage peut être du gruyère, de la mozzarella, du cheddar ou de l'emmenthal, par exemple.

La sauce peut être de la moutarde, du ketchup, de la sauce tomate ou une sauce blanche, par exemple.

Les céréales peuvent être du riz ou de l'orge perlé que l'on peut précuire ou du sesame ou du pavot, par exemple.

Les épices peuvent être du poivre, du romarin, de la sauge, du gingembre, du thym, du piment ou du cumin, par exemple.

Si l'on souhaite réaliser un plat cuisiné sucré, on peut disposer, sur la bande ou le fond de pâte selon l'invention, des fruits entiers et/ou en morceaux, une sauce, des épices et/ou des céréales, par exemple.

Les fruits peuvent être des pommes, des poires, des cerises, des ananas ou des abricots, par exemple

La sauce peut être une sauce à la vanille, une sauce au caramel ou une sauce au chocolat, par exemple.

Les épices peuvent être de la cannelle, de la vanille, par exemple.

Les céréales peuvent être du riz ou de l'orge perlé que l'on peut précuire, par exemple.

La présente invention a également pour objet le plat cuisiné, obtenu par la mise en oeuvre du présent procédé.

Le procédé selon la présente invention est décrit plus en détails dans les exemples ci-après. Dans ces exemples, les pourcentages et parties sont donnés en poids, sauf indications contraires.

### Exemple 1

A l'aide du procédé selon la présente invention, on réalise un feuilleté aux champignons et à la volaille.

Pour ce faire, on effectue un mélange à température ambiante d'une composition contenant 28 g de farine de blé tendre, 0,6 g de sel, 0,3 g de protéines acides et 0,6 g de levure inactivée thermiquement. On effectue cette étape de mélange dans un broyeur à pales commercialisé par Maschinen Fabrik Laska, GES M.B.H, Markstrasse 60, AU - 4050 TRAUN.

Au cours du mélange de la composition, on ajoute 11,4 g de margarine feuilletée en morceaux, de manière à obtenir une pâte hétérogène. Puis on incorpore 14,3 g d'eau à la pâte.

On extrude ensuite la pâte feuilletée ainsi réalisée dans un extrudeur bi-vis commercialisé par Rijkaart Maschinen Fabrik, NL - 4147 CT Asperen.

Parallèlement, on prépare une garniture aux champignons et à la volaille. Pour ce faire, on prépare une sauce à partir de 0,76 g d'huile de tournesol, de 3,8 g de lamelles d'oignons, 0,04 g de sel fin, 0,004 g d'ail séché, 0,008 g de laurier, 0,004 g de thym et 0,008 g de poivre noir. On mélange ensuite 2,67 g de cette sauce avec 2,67 g de champignons de Paris émincés, 2,67 g de viande de dinde cuite, 0,67 g de pois fins blanchis surgelés et 1,34 g de fromage à raclette râpé.

On fonce ensuite la pâte feuilletée et l'on dispose sur le fond de pâte la garniture aux champignons et à la volaille ainsi préparée.

On cuit ensuite le feuilleté aux champignons et à la volaille en four conventionnel à 200° C pendant 18 min.

Puis on le stocke à -40° C.

Le consommateur peut disposer ainsi le feuilleté aux champignons et à la volaille sur un plat et le réchauffer aux micro-ondes pendant 3 min, sans que la pâte feuilletée perde sa texture légère et aérée.
Le feuilleté ainsi réchauffé a l'aspect doré et la texture croustillante en surface, la texture bien aérée à l'intérieur et un goût et un arôme semblables aux feuilletés traditionnels.

### Exemple 2

On prépare un feuilleté à la brouillade d'oeufs.

Pour ce faire, on procède de la manière telle que décrite à l'exemple 1, à l'exception du fait que l'on dispose sur le fond de pâte une garniture à la brouillade d'oeufs.

On prépare donc une brouillade d'oeufs à partir d'une sauce contenant 2,2 g d'eau, 0,3 g d'amidon de maïs, 0,07 g de bouillon de volaille, 0,005 g de poivre noir, 0,005 g de noix de muscade, 0,005 g d'extrait aromatique végétal jaune, 2,5 g de crème fraîche pasteurisée. On mélange cette sauce à 2 g de morceaux d'omelette, 2 g d'épaule de porc cuite et fumée et 1 g de fromage à raclette râpée.

On fonce ensuite la pâte feuilletée que l'on a préalablement préparée et l'on dispose sur le fond de pâte la garniture à la brouillade d'oeufs.

On cuit ensuite le feuilleté à la brouillade d'oeufs en four conventionnel à 200° C pendant 18 min.

Puis on le stocke à -40° C.

Le consommateur peut disposer ainsi le feuilleté à la brouillade d'oeufs sur un plat et le réchauffer aux micro-ondes pendant 3 min, sans que la pâte feuilletée perde sa texture légère et aérée.
Le feuilleté ainsi réchauffé a l'aspect doré et la texture croustillante en surface, la texture bien aérée à l'intérieur et un goût et un arôme semblables aux feuilletés traditionnels.

## Revendications

1. Procédé de préparation d'une pâte feuilletée, dans lequel:
- on effectue un mélange à température ambiante d'une composition contenant, pour 1 kg de farine, 16-24 g de sel, 7-13 g de protéines acides, 19-21 g d'agent de fermentation inactivé,
- on ajoute à cette composition, au cours de l'étape de mélange, 320-480 g de matière grasse en morceaux, de manière à obtenir une pâte hétérogène,
- enfin on incorpore 450-550 g d'eau à température ambiante à cette pâte,
- on extrude la pâte, de manière à compresser les morceaux de matière grasse et à obtenir une pâte feuilletée,
- puis on stocke la pâte feuilletée ainsi obtenue à une temprature de - 40° C à + 10° C.

2. Procédé selon la revendication 1, dans lequel on effectue l'étape de mélange dans un broyeur à pales pendant 20 s à 1 min à 5-13 rpm.

3. Procédé selon la revendication 1, dans lequel on cuit la pâte feuilletée avant ou après l'étape de stockage.

4. Procédé selon la revendication 3, dans lequel on réchauffe la pâte feuilletée aux micro-ondes.

5. Procédé selon la revendication 1, dans lequel l'agent de fermentation inactivé est une levure boulangère inactivée thermiquement ou une levure lactique inactivée thermiquement.

6. Procédé selon la revendication 1, dans lequel, avant ou après l'étape de stockage, on lamine ou on fonce la pâte feuilletée, on dispose sur la bande ou sur le fond de pâte feuilletée des morceaux de viande ou de poisson, une sauce, des légumes ou des fruits entiers et/ou en morceaux, du fromage, des épices et/ou des céréales et l'on effectue une étape de cuisson.

## Claims

1. Process for preparing a flaky pastry wherein:
- a mixture is prepared at ambient temperature of a composition containing, for 1 kg of flour, 16-24 g of salt, 7-13 g of acid proteins and 19-21 g of inactivated fermenting agent,
- 320-480 g of pieces of fat are added to this composition during the mixing step so as to obtain a heterogeneous dough,
- finally, 450-550 g of water are incorporated at ambient temperature into this dough,
- the dough is extruded so as to compress the pieces of fat and to obtain a flaky pastry,
- the flaky pastry obtained in this way is stored at a temperature of -40°C to +10°C.

2. Process according to claim 1, wherein the mixing step is carried out in a blade mill for 20 s to 1 min at 5-13 rpm.

3. Process according to claim 1, wherein the flaky pastry is cooked before or after the storage step.

4. Process according to claim 3, wherein the flaky pastry is heated with microwaves.

5. Process according to claim 1, wherein the inactivated fermenting agent is a heat-inactivated baker's yeast or a heat-inactivated lactic yeast.

6. Process according to claim 1 wherein, before or after the storage step, the flaky pastry is rolled out or a tin is lined with it, pieces of meat or fish, a sauce, vegetables or fruit, whole and/or in pieces, cheese, spices and/or cereals are placed on a strip of flaky pastry or on the bottom of the pastry in a tin and a cooking step is carried out.

## Patentansprüche

1. Verfahren zur Herstellung von Blätterteig, bei dem man
- bei Raumtemperatur eine Zusammensetzung mischt, die auf 1 kg Mehl 16-24 g Salz, 7-13 g saure Proteine und 19-21 g inaktiviertes Fermentationsmittel enthält,
- bei diesem Mischschritt 320-480 g Fett in Stücken beigibt, so dass man einen heterogenen Teig erhält,
- schließlich in diesen Teig 450-550 g Wasser mit Raumtemperatur einarbeitet,
- den Teig so extrudiert, dass die Fettstücke zusammengedrückt werden und man Blätterteig erhält,
- und diesen Blätterteig bei einer Temperatur von -40°C bis +10°C lagert.

2. Verfahren nach Anspruch 1, bei dem man den Mischschritt in einer Schaufelmühle während 20 s bis 1 min mit 5-13 U/min durchführt.

3. Verfahren nach Anspruch 1, bei dem man den Blätterteig vor oder nach dem Lagerungsschritt bäckt.

4. Verfahren nach Anspruch 3, bei dem man den Blätterteig durch Mikrowellen erhitzt.

5. Verfahren nach Anspruch 1, bei dem das inaktivierte Fermentationsmittel thermisch inaktivierte Backhefe oder eine thermisch inaktivierte Milchhefe ist.

6. Verfahren nach Anspruch 1, bei dem man den Blätterteig vor oder nach dem Lagerungsschritt auswalzt oder zu einem Boden auslegt, auf dem Teigband oder Teigboden Fleisch- oder Fischstücke, eine Sauce, Gemüse oder Obst, ganz und/oder in Stücken, Käse, Gewürze und/oder Getreide anordnet und einen Backschritt durchführt.
